# DEMANDE DE BREVET EUROPEEN

(11) **EP 2 398 069 A2**
(43) Date de publication de la demande: **21.12.2011**
(21) Numéro de dépôt: 11169823.9
(22) Date de dépôt: 14.06.2011
(51) Int. Cl.: H01L 31/048, F24J 2/52

(54) **Platine de fixation et procédé de fabrication correspondant**

(30) Priorité: 15.06.2010 FR 1002520
(71) Demandeur: Tavagor Developpement, 17000 La Rochelle (FR)
(72) Inventeur: Tabeau, Patrice, 17670 La Couarde Sur Mer (FR)
(74) Mandataire: Godineau, Valérie

(57) **Abrégé**

L'invention concerne une platine de fixation (1) destinée à être fixée sur une structure support. Ladite platine (1) comprend un corps (10) de type plaque présentant au moins une fente (100).

Selon l'invention, ledit corps de platine (1) est équipé d'au moins une pièce écrou (2) formée par un élément de base s'étendant d'un côté du corps de platine (1) et à travers lequel est ménagé un orifice de passage de vis situé en regard de la fente (100), ledit élément de base empêchant l'extraction de l'élément de base à travers la fente (100). Ladite pièce écrou (2) comprend au moins un élément de tête qui s'étend depuis l'élément de base à travers la fente (100) et qui présente au moins deux parties permettant de maintenir la pièce écrou (2) prisonnière de la fente (100). Ledit élément de base et ledit élément de tête sont formés d'une seule pièce.

## Description

La présente invention concerne de manière générale les platines de fixation de préférence pour la fixation de panneaux photovoltaïques sur la toiture d'une construction.

L'invention concerne plus particulièrement une platine de fixation destinée à être fixée sur une structure support, telle qu'un bac formé d'une plaque ondulée, ladite platine comprenant un corps de type plaque présentant au moins une fente.

Le montage de panneaux photovoltaïques sur une toiture s'effectue de manière générale par la fixation d'une structure support formée de plaques ondulées appelées bacs, fixées par des vis et/ou cavaliers sur des panes de la toiture. Puis on vient fixer des platines sur lesdits bacs.

Chaque platine comprend des moyens de couplage de type vis/écrou destinés à recevoir une pièce de fixation enfilée sur la vis pour caler et maintenir en appui un panneau sur lesdits bacs. Les platines sont positionnées de manière à permettre le maintien du panneau au niveau de chacun de ses bords opposés dits verticaux correspondant aux bords des panneaux parallèles aux fermettes de la toiture.

Dans les solutions connues de l'état de la technique, les moyens de couplage de la pièce de fixation à la platine sont complexes puisqu'ils comportent un ensemble formé d'une vis à passer à travers la fente par le dessous de la platine pour positionner la tête de vis côté inférieur de la platine, un contre-écrou à enfiler sur la tige filetée de la vis côté supérieur de la platine, et un écrou à enfiler sur la tige après la pièce de fixation de manière à prendre en sandwich une partie de la pièce de fixation entre l'écrou et le contre-écrou. Une telle conception des moyens de couplage de la platine connue de l'état de la technique nécessite un nombre de pièces important et une manipulation complexe pour l'opérateur. En outre, le système à écrou peut être perdu lors du démontage dudit système par rapport à la platine.

On connait également du document WO 2007/044197 une platine de fixation qui comprend une fente de passage d'une pièce écrou qui s'étend à travers la fente, de part et d'autre de la platine, avec possibilité de coulissement le long de la fente. Cependant, le montage de cette pièce écrou à travers la fente est permis à l'aide d'une ouverture élargie ménagée dans la fente, ce qui nécessite d'introduire cette pièce écrou par ladite ouverture puis de la faire coulisser le long de la fente pour l'écarter de cette ouverture élargie. Il en résulte que cette pièce écrou peut échapper à la fente lorsqu'elle est située au niveau de l'ouverture élargie.

En outre, la solution du document W02007/044197 présente l'inconvénient de devoir compliquer la conception de la pièce écrou puisque la conception d'une pièce écrou selon le document W02007/044197 nécessite de ménager un dégagement dans la pièce dès la conception de la pièce.

En outre, la solution du document WO 2007/044197, complique la conception du corps de platine puisqu'il est nécessaire de prévoir une ouverture élargie à un endroit de la fente. La pièce écrou du document WO 2007/044197 ne résout pas le problème du risque de perte de cette pièce écrou par rapport à la platine puisque ladite pièce écrou peut coulisser librement le long de la fente jusqu'à arriver à l'ouverture élargie, et ainsi tomber de la platine.

Enfin, dans le document WO 2007/044197, le montage de la pièce écrou à l'intérieur de la fente est compliqué puisqu'il ne peut pas s'effectuer à n'importe quel endroit de la fente mais bien à travers l'ouverture élargie pour pouvoir introduire la pièce écrou à travers la fente, ladite pièce écrou devant ensuite être écartée de cette ouverture pour pouvoir prendre en sandwich un bord de fente.

Le but de la présente invention est de proposer une platine de fixation pour laquelle les moyens de couplage à la platine de la pièce de fixation comportent un nombre réduit de pièce, et sans risque de perte d'au moins une partie desdits moyens de couplage.

Un autre but de la présente invention est de proposer une platine de fixation grâce à laquelle le couplage de la pièce de fixation à la platine s'effectue aisément avec un nombre de manipulations réduit.

A cet effet, l'invention a pour objet une platine de fixation destinée à être fixée sur une structure support, telle qu'un bac formé d'une plaque ondulée,
ladite platine comprenant un corps de type plaque présentant au moins une fente,
ledit corps de platine étant équipé d'au moins une pièce écrou formée par un élément de base s'étendant d'un côté du corps de platine et à travers lequel est ménagé un orifice de passage de vis situé en regard de la fente, ledit élément de base présentant une largeur hors-tout, prise orthogonalement à l'axe longitudinal de la fente, supérieure à la largeur de ladite fente, ladite pièce écrou comprenant également au moins un élément de tête s'étendant depuis l'élément de base à travers la fente,
ledit au moins un élément de tête présentant au moins deux parties, appelées oreilles, qui s'étendent, par rapport à l'ouverture de la fente, du côté du corps de platine opposé à l'élément de base et de part et d'autre de l'axe longitudinal de la fente correspondante, au droit des bords longitudinaux de ladite fente,
ledit élément de base et ledit ou chaque élément de tête étant formés d'une seule pièce,
caractérisée en ce que ledit élément de base et les oreilles dudit ou de chaque élément de tête forment des butées, vis-à-vis des bords longitudinaux de ladite fente, qui empêchent l'extraction de la pièce écrou quelle que soit la position que la pièce écrou est apte à prendre le long de la fente.

Autrement dit, la forme de la fente et celle de la pièce écrou empêchent ladite pièce écrou d'être extraite de la fente, dans un sens ou dans l'autre, quelle que soit la position de la pièce écrou le long de la fente. La fente est dépourvue de zone permettant l'extraction de ladite pièce écrou contrairement à la solution du document WO 2007/044197.

Grâce à l'élément de base et aux oreilles de la pièce écrou, chaque bord longitudinal de la fente est pris en sandwich entre l'élément de base et une oreille de l'élément de tête afin de maintenir la pièce écrou prisonnière dans la platine tout en autorisant son coulissement le long de la fente. En effet, chaque oreille forme en coopération avec l'élément de base des butées anti-extraction de ladite pièce écrou. En outre, les bords longitudinaux de la fente forment des rails de guidage à coulissement de la pièce écrou correspondante.

La platine peut ainsi être livrée avec la pièce écrou, sans que l'opérateur ait besoin de monter ladite pièce écrou dans la platine. Le fait d'emprisonner la pièce écrou évite que celle-ci puisse être perdue. En outre, la pièce écrou peut librement coulisser le long de la fente dans laquelle elle est prisonnière pour adapter la position de la pièce écrou, et donc la position de la pièce de fixation, à la position du bord du panneau qui arrive au dessus de la platine.

En particulier, chaque platine permet d'enjamber la zone intermédiaire entre deux ondes d'un bac et ainsi de positionner au niveau de ladite zone intermédiaire la pièce de fixation par coulissement le long de la fente de la pièce écrou qui reçoit la pièce de fixation pour tenir un bord d'extrémité de panneau qui serait situé au droit de la zone intermédiaire.

Une telle conception d'écrou prisonnier dans une fente de la platine est mécaniquement fiable et rapide à mettre en oeuvre.

Au contraire de la solution du document WO 2007/044197, la pièce écrou de la platine selon l'invention, tout en étant réalisée d'une seule pièce, est rendue prisonnière de la fente sans possibilité d'échapper à ladite fente, grâce à la déformation de l'élément de tête une fois introduite la pièce écrou dans la fente, ce qui ne nécessite pas une conception particulière complexe de la pièce écrou avant son introduction dans la fente. En outre quelle que soit la position et/ou l'orientation de la pièce écrou, la largeur hors tout de ladite pièce écrou de la platine selon l'invention reste supérieure à la largeur de la fente en n'importe quel endroit de la fente. La platine selon l'invention permet ainsi de bénéficier d'une pièce écrou prisonnière de la fente à travers laquelle elle s'étend tout en conservant une forme de fente classique, de préférence oblongue.

Avec la platine de fixation selon l'invention, la pièce-écrou peut être introduite, avant formation des oreilles, aisément dans la fente qui peut être réalisée simplement sans nécessiter d'ouverture élargie, puisque la pièce-écrou est rendue prisonnière de la fente simplement par déformation de la partie de tête après introduction de la pièce écrou à travers la fente du corps de platine.

La partie de chaque élément de tête de la pièce écrou qui s'étend entre les oreilles correspondantes et l'élément de base est de largeur légèrement inférieure à la largeur de la fente le long de laquelle peut coulisser ladite pièce écrou pour permettre à la pièce écrou de coulisser le long de la fente, à l'état libre de ladite pièce écrou par rapport à la pièce de fixation et au panneau destiné à être fixé sur la platine, tout en limitant le jeu latéral de la pièce écrou par rapport à la fente.

Une fois formées les oreilles en regard des bords de fente comme détaillé ci-après ladite pièce écrou est indémontable de la platine. En effet, une fois formées lesdites oreilles, la largeur hors tout de l'élément de tête et celle de l'élément de base sont chacune supérieure à la largeur hors tout de la fente et forment ainsi des butées situées de part et d'autre du plan d'ouverture de la fente.

La pièce est dépourvue de liberté de pivotement autour de l'axe de son orifice. Autrement dit, ladite pièce écrou est apte à coulisser le long de la fente mais conserve sensiblement la même orientation angulaire par rapport à ladite fente.

Selon une caractéristique avantageuse de l'invention, ladite pièce écrou comprend deux éléments de tête répartis de part et d'autre de l'axe de passage de vis ménagé à travers la pièce écrou, chaque élément de tête présentant deux oreilles et la droite passant par les deux éléments de tête étant sensiblement parallèle à l'axe longitudinal de la fente correspondante.

La conception de deux éléments de tête répartis de part et d'autre de l'axe de passage de vis de la pièce écrou permet de centrer et positionner le passage de vis en regard de la fente correspondante de la platine lors du montage des éléments de tête à travers la fente. En outre, les deux éléments de tête écartés le long de la fente permettent d'obtenir un guidage à coulissement fiable de la pièce écrou le long de la fente.

Selon un mode de réalisation préféré de la platine selon l'invention, ladite platine comprend deux fentes emprisonnant chacune une pièce écrou, lesdites fentes étant orientées parallèlement l'une à l'autre en étant écartées l'une de l'autre suivant leur direction longitudinale, et, d'autre part, écartées l'une de l'autre suivant une direction transversale à leur direction longitudinale.

Les platines à deux fentes sont des platines dites platines trois ondes, c'est-à-dire de longueur choisie pour chevaucher trois ondes d'un bac. Les deux fentes permettent de bénéficier d'une course de fixation d'un panneau sur une grande longueur de la platine par combinaison des deux fentes, tout en bénéficiant d'une bonne résistance à l'arrachement de chaque fente qui ne s'étend que sur une partie de la longueur de la platine.

Les deux fentes permettent d'éviter les problèmes de chevauchement des panneaux par rapport à leurs zones de fixation en utilisant la pièce de fixation d'une fente ou d'une autre en fonction de la largeur du panneau et en décalant ladite pièce de fixation le long de la fente choisie en fonction de la position du bord du panneau au dessus de la platine.

Avantageusement, chaque fente est réalisée par découpe du corps de platine et enfoncement de la bordure périphérique de la fente en direction du côté du corps de platine au niveau duquel est destiné à être positionné l'élément de base, de telle sorte que le ou chaque élément de tête de la pièce écrou qui s'étend à travers la fente, ne dépasse pas du plan d'affleurement de la face du corps de platine située opposée au côté d'applique de l'élément de base.

Selon une caractéristique avantageuse de l'invention, ledit ou chaque élément de tête est obtenu par découpe partielle et déformation d'une partie de l'élément de base. A cet effet, la ou chaque partie destinée à former élément de tête est partiellement découpée et amenée en saillie d'une face dudit élément de base.

En particulier, à l'aide d'une presse et d'un outil de crevage adapté on vient réaliser côté face inférieure de l'élément de base des découpes partielles dans l'élément de base, de part et d'autre de l'orifice de passage de vis dudit élément de base, afin de délimiter les éléments de tête qui sont pliés et/ou déformés pour s'étendre en saillie de la face supérieure de l'élément de base.

Selon une caractéristique avantageuse de l'invention, chaque oreille est réalisée par incision d'une partie de l'élément de tête correspondant, et écartement de ladite partie transversalement à l'axe longitudinal de la fente.

En particulier, la pièce écrou est appliquée sur la platine de manière à amener la face supérieure de l'élément de base contre la face inférieure de la platine dans une orientation selon laquelle le ou chaque élément de tête traverse la fente correspondante de la platine, l'orifice de passage de vis étant situé en regard de la fente. L'ensemble platine/pièce écrou est alors coincé sur un support et deux incisions sont réalisées dans le ou chaque élément de tête à l'aide d'une presse et d'un outil de crevage adapté de manière à écarter l'une de l'autre les oreilles du ou de chaque élément de tête, pour amener lesdites oreilles en regard des bords longitudinaux de la fente pour emprisonner la pièce écrou dans la fente en prenant en sandwich lesdits bords longitudinaux de la fente entre les oreilles et l'élément de base.

Avantageusement, les oreilles sont réalisées à l'aide d'un outil de crevage à deux pointes et les éléments de tête sont formés par un outil de crevage à deux lames.

Selon une caractéristique avantageuse de l'invention, les bords longitudinaux de la platine présentent chacun une partie pliée en retour de manière à augmenter la rigidité de la platine.

Selon une caractéristique avantageuse de l'invention, les parties d'extrémité de la platine sont pliées de manière à présenter au moins une partie s'étendant jusqu'au bord d'extrémité libre correspondant suivant un angle donné par rapport au plan moyen du corps de platine, lesdites parties inclinées des extrémités opposées de la platine étant orientées en V inversé en position fixée de la platine sur ladite structure support.

L'invention concerne également un procédé de fabrication d'une platine de fixation telle que décrite ci-dessus, à l'aide d'un corps de type plaque présentant au moins une fente et d'une pièce écrou formée par un élément de base présentant deux faces opposées à travers lesquelles est ménagé un orifice de passage de vis. Ledit procédé comprend les étapes suivantes :
- déformation d'au moins une partie, de préférence deux parties, dudit élément de base, appelée(s) élément(s) de tête, pour (les) l'amener en saillie d'une face dudit élément de base,
- positionnement dudit élément de base d'un côté du corps de platine en engageant le ou chaque élément de tête à travers la fente, ledit élément de base présentant une largeur hors-tout, prise orthogonalement à l'axe longitudinal de la fente, supérieure à la largeur de ladite fente,
- déformation de deux parties, appelées oreilles, dudit ou de chaque élément de tête, de telle sorte que lesdites oreilles s'étendent de part et d'autre de l'axe longitudinal de la fente correspondante, au droit des bords longitudinaux de ladite fente, de manière à maintenir la pièce écrou prisonnière de la fente.

Quelle que soit la position que la pièce écrou est susceptible de prendre le long de ladite fente, à l'état non encore fixé d'un panneau sur la platine, la largeur de la fente à cette position de la pièce-écrou, c'est-à-dire la distance entre les bords longitudinaux de la fente à cette position le long de l'axe longitudinal de la fente, est inférieure à la largeur hors-tout de l'élément de tête prise au niveau de l'extérieur des oreilles, de sorte que la pièce écrou est définitivement prisonnière de la fente correspondante.

Les oreilles sont formées par les parties latérales opposées du ou de chaque élément de tête qui sont déformées de manière à les amener au droit des bords de fente pour que chaque bord de fente soit prisonnier entre l'élément de base et une oreille de l'élément de tête.

Selon une caractéristique avantageuse de l'invention, la déformation dudit élément de base pour l'obtention dudit ou de chaque élément de tête est réalisée par crevage à l'aide d'un outil à deux lames écartées entre elles d'une distance correspondant à la largeur souhaitée de l'élément de tête.

Selon une caractéristique avantageuse de l'invention, la déformation des deux oreilles dudit ou de chaque élément de tête est réalisée à l'aide d'un outil à deux pointes. Chaque pointe, destinée à la formation d'une oreille, présente une partie de coupe droite et une partie de coupe inclinée permettant, lors de la pénétration de la pointe dans l'élément de tête, d'écarter ladite oreille à réaliser vers l'extérieur de l'élément de tête.

L'invention sera bien comprise à la lecture de la description suivante d'exemples de réalisation, en référence aux dessins annexés dans lesquels :

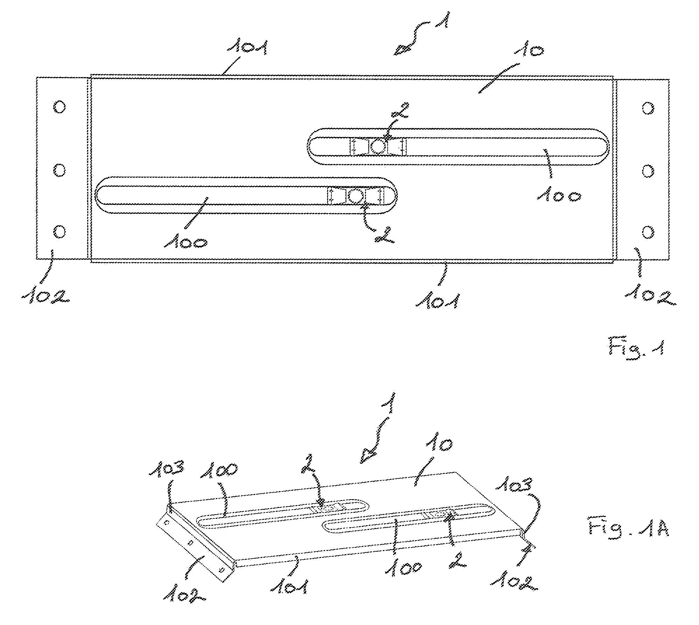

- la figure 1 est une vue de dessus de la platine de fixation selon l'invention;
- la figure 1A est une vue en perspective de la platine de fixation selon l'invention;

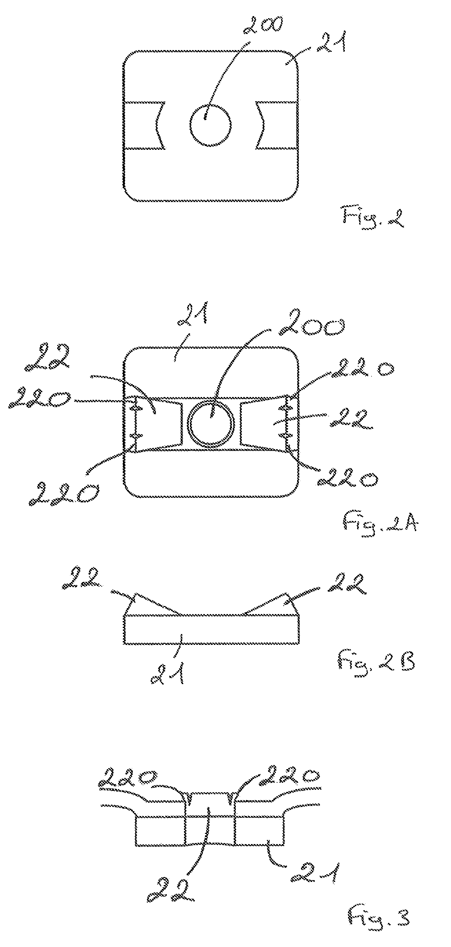

- la figure 2 est une vue de dessous de la pièce écrou de la platine selon l'invention montrant l'élément de base de la pièce écrou ;
- la figure 2A est une vue de dessus de la pièce écrou de la figure 2 montrant les éléments de tête et leurs oreilles ;
- la figure 2B est une vue de côté de la pièce écrou selon l'invention montrant les éléments de tête en saillie de l'élément de base ;
- la figure 3 est une vue en coupe transversale de la platine de la figure 1 selon un plan de coupe passant par deux oreilles d'une pièce écrou prisonnière dans une fente ;

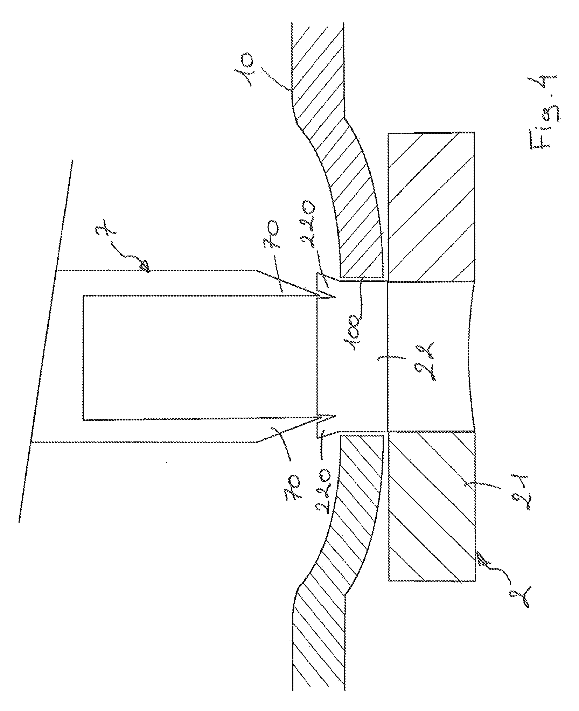

- la figure 4 est une vue schématique de la pièce écrou et de l'outil de crevage à deux pointes pour l'opération de crevage des éléments de tête de la pièce écrou engagés dans une fente de la platine pour la formation des oreilles.

En référence aux figures et comme rappelé ci-dessus, l'invention concerne une platine de fixation 1 destinée à être fixée sur une structure support, telle qu'un bac formé d'une plaque ondulée.

Ladite platine 1 comprend un corps 10 de type plaque présentant au moins une fente 100 ménagée le long de l'axe longitudinal de la platine.

De manière caractéristique à l'invention, ledit corps de platine 1 est équipé d'au moins une pièce écrou 2 formée par un élément de base 21 s'étendant du côté de la face dite inférieure du corps de platine 1 et à travers lequel est ménagé un orifice 200 taraudé de passage de vis situé en regard de la fente 100. La pièce écrou 2 est destinée à recevoir une vis sur laquelle est destinée à être enfilée une pièce de fixation pour tenir un objet, de préférence un panneau, tel qu'un panneau photovoltaïque.

La face inférieure de la platine est celle destinée à être orientée du côté de la structure support et la face supérieure est celle destinée à être orientée côté panneau.

Ledit élément de base 21 présente une largeur hors-tout, prise orthogonalement à l'axe longitudinal de la fente 100, supérieure à la largeur de ladite fente, pour empêcher l'extraction de l'élément de base 21 à travers la fente 100.

Autrement dit, ledit élément de base 21 est dimensionné de manière à présenter au moins une partie s'étendant, d'un côté du corps de platine, de part et d'autre de l'axe longitudinal de la fente 100 pour former butée anti-extraction par rapport à la fente.

Ladite pièce écrou 2 comprenant également au moins un élément de tête 22 s'étendant depuis l'élément de base 21 à travers la fente 100.

Dans l'exemple illustré aux figures, ladite pièce écrou 2 comprend deux éléments de tête 22 répartis de part et d'autre de l'axe de passage 200 de vis ménagé à travers la pièce écrou 2. Chaque élément de tête 22 présente deux oreilles 220 et la droite passant par les deux éléments de tête 22 sont sensiblement parallèles à l'axe longitudinal de la fente 100 correspondante.

Chaque élément de tête 22 présente au moins deux parties, appelées oreilles 220, qui s'étendent, par rapport à l'ouverture de la fente 100, du côté du corps de platine opposé à l'élément de base 21, de part et d'autre de l'axe longitudinal de la fente 100 de manière à maintenir la pièce écrou 2 prisonnière de la fente 100. Autrement dit, les deux oreilles s'étendent de part et d'autre de la fente par rapport au plan orthogonal au plan d'ouverture de la fente et passant par l'axe longitudinal de la fente, à l'aplomb d'un bord longitudinal.

Chaque oreille 220 s'étend au dessus et en regard d'un bord longitudinal de la fente pour prendre en sandwich ledit bord longitudinal avec l'élément de base 21.

Ledit élément de base 21 et chaque élément de tête 22 sont formés d'une seule pièce. Dans l'exemple illustré aux figures, les oreilles de la pièce écrou s'étendent côté supérieur de la platine et l'élément de base est situé côté inférieur. En variante, on pourrait prévoir que les oreilles de la pièce écrou s'étendent côté inférieur de la platine et que l'élément de base soit situé côté supérieur.

Les platines sont des platines de longueur choisie pour être montées à cheval sur au moins deux ondes. Avantageusement, la structure de support comprend des platines, dites platines trois ondes, dont la longueur est choisie de manière à permettre leur montage à cheval sur trois ondes.

Ladite platine 1 comprend deux fentes 100 emprisonnant chacune une pièce écrou 2. Lesdites fentes 100 sont orientées parallèlement l'une à l'autre en étant écartées l'une de l'autre suivant leur direction longitudinale, et, d'autre part, écartées l'une de l'autre suivant une direction transversale à leur direction longitudinale.

Une telle conception de platine à deux fentes permet d'améliorer la rigidité de chaque fente et ainsi de limiter le risque d'arrachement de l'écrou à travers la fente tout en offrant une grande plage de positions possibles de la pièce de fixation destinée à être couplée à la pièce écrou pour la fixation d'un panneau.

Chaque fente 100 est réalisée par découpe du corps de platine à plat, puis enfoncement de la bordure périphérique de la fente 100 en direction du côté inférieur du corps de platine, de telle sorte que le ou chaque élément de tête 22 de la pièce écrou 2 qui s'étend à travers la fente 100, ne dépasse pas du plan d'affleurement de la face supérieure du corps de platine.

Ainsi, ladite bordure périphérique de la fente s'étend en saillie de la face inférieure du corps de la platine, tout en conservant une bordure de fente dite plate, c'est-à-dire une bordure de fente s'étendant dans un plan sensiblement parallèle au plan moyen du corps de la platine.

En particulier, la ou chaque fente est réalisée à l'aide d'une presse munie d'un poinçon de section oblongue qui est amené contre la plaque avec un angle, de préférence réduit, pour ne pas arracher la matière de la plaque. Puis un autre outil, dit de soyage, est amené contre la bordure de la fente pour l'enfoncer légèrement de manière à réaliser une opération de soyage de la fente. Le soyage permet d'accentuer la rigidité de la fente et ainsi de limiter le risque d'arrachage de la pièce écrou à travers la fente. En outre, le soyage permet d'abaisser la fente par rapport à la face supérieure de la platine de telle sorte que les éléments de tête de la pièce écrou ne dépassent pas de la face supérieure de la platine.

Chaque élément de tête 22 est obtenu par découpe partielle et par déformation d'une partie de l'élément de base 21 de telle sorte que chaque partie destinée à former élément de tête 22 s'étend en saillie d'une face dudit élément de base 21 pour pouvoir être introduite à travers la fente.

La déformation de l'élément de base pour former les éléments de tête est obtenue à l'aide d'un outil, dit de crevage, à deux lames présentant deux lames écartées d'une distance correspondant à la largeur de tête souhaitée avant réalisation des oreilles de ladite tête, c'est-à-dire une distance inférieure à la largeur de la fente pour permettre le passage de chaque élément de tête à travers la fente correspondante.

On entend par crevage une opération de découpage incomplet à l'aide d'un poinçon ou de cisailles, la débouchure obtenue n'étant pas détachée complètement de la pièce.

Comme rappelé ci-dessus, l'élément de base 21 restant, situé du côté opposé aux éléments de tête 22 par rapport à la fente, forme butée de limitation d'insertion de chaque élément de tête à travers la fente.

Chaque oreille 220 est réalisée par incision d'une partie de dessus de l'élément de tête 22 correspondant et écartement de ladite partie orthogonalement à l'axe longitudinal de la fente. En particulier, chaque oreille 220 est délimitée entre un bord latéral libre de l'élément de tête 22 correspondant et la zone d'incision réalisée par l'outil de crevage à deux lames.

Chaque incision est réalisée de préférence à l'aide d'un outil 7 à deux dents ou pointes 70. Chaque dent ou pointe 70 présente une partie ou arête de coupe droite, par rapport à l'axe selon lequel est destiné à être déplacé l'outil par rapport à la pièce écrou pour former chaque oreille, et une partie ou arête de coupe inclinée, par rapport à ladite partie ou arête de coupe droite, de manière à écarter la partie incisée de l'élément de tête vers, et en en particulier à l'aplomb de, un bord longitudinal de la fente.

Les bords longitudinaux de la platine présentent chacun une partie pliée en retour 101 côté face inférieure du corps de platine de manière à augmenter la rigidité de la platine.

Les parties d'extrémité de la platine 1 sont pliées de manière à présenter une partie 102 s'étendant jusqu'au bord d'extrémité libre correspondant suivant un angle donné par rapport au plan moyen du corps 10 de platine. Lesdites parties inclinées 102 des extrémités opposées de la platine 1 sont orientées en V inversé en position fixée de la platine sur ladite structure support.

Lesdites parties inclinées permettent le montage de la platine à cheval sur plusieurs ondes, de préférence deux ou trois, d'un bac. Lesdites parties inclinées viennent chacune en appui contre un flanc d'une onde, pour être fixées par vissage sur les flancs extérieurs de l'ensemble d'ondes que la platine chevauche. A cet effet, chaque partie d'extrémité de la platine comporte des orifices traversants.

Les parties d'extrémité comprennent également chacune une partie, dite droite, en retour, sensiblement perpendiculaire au plan moyen du corps principal de platine, qui s'étend entre la partie inclinée d'extrémité et le corps principal de platine.

La platine de fixation selon l'invention avec écrou prisonnier, telle que décrite ci-dessus, peut être réalisée selon le procédé suivant, à l'aide d'un corps 10 de type plaque présentant au moins une fente 100 et d'une pièce écrou 2 formée par un élément de base 21 présentant deux faces opposées à travers lesquelles est ménagé un orifice 200 de passage de vis.

Ledit procédé comprend les étapes principales suivantes :
- déformation de deux parties 22 dudit élément de base 21, appelées éléments de tête, pour les amener en saillie d'une face dudit élément de base 21, lesdits éléments de tête 22 étant diamétralement opposés par rapport à l'axe du passage de vis 200,
- positionnement dudit élément de base 21 d'un côté du corps de platine 1 en engageant chaque élément de tête 22 à travers la fente 100,
- déformation de deux parties, appelées oreilles 220, de chaque élément de tête 22, de telle sorte que lesdites oreilles 220 s'étendent de part et d'autre de l'axe longitudinal de la fente 100 de manière à maintenir la pièce écrou 2 prisonnière de la fente 100.

La présente invention n'est nullement limitée aux modes de réalisation décrits et représentés, mais l'homme du métier saura y apporter toute variante conforme à son esprit.

## Revendications

1. Platine de fixation (1) destinée à être fixée sur une structure support, telle qu'un bac formé d'une plaque ondulée,
ladite platine (1) comprenant un corps (10) de type plaque présentant au moins une fente (100),
ledit corps de platine (1) étant équipé d'au moins une pièce écrou (2) formée par un élément de base (21) s'étendant d'un côté du corps de platine (1) et à travers lequel est ménagé un orifice (200) de passage de vis situé en regard de la fente (100), ledit élément de base (21) présentant une largeur hors-tout, prise orthogonalement à l'axe longitudinal de la fente (100), supérieure à la largeur de ladite fente, ladite pièce écrou (2) comprenant également au moins un élément de tête (22) s'étendant depuis l'élément de base (21) à travers la fente (100),
ledit au moins un élément de tête (22) présentant au moins deux parties, appelées oreilles (220), qui s'étendent, par rapport à l'ouverture de la fente (100), du côté du corps de platine opposé à l'élément de base (21) et de part et d'autre de l'axe longitudinal de la fente (100) correspondante, au droit des bords longitudinaux de ladite fente,
ledit élément de base (21) et ledit ou chaque élément de tête (22) étant formés d'une seule pièce,
**caractérisée en ce que** ledit élément de base (21) et les oreilles (220) dudit ou de chaque élément de tête (22) forment des butées, vis-à-vis des bords longitudinaux de ladite fente, qui empêchent l'extraction de la pièce écrou quelle que soit la position que la pièce écrou (2) est apte à prendre le long de ladite fente (100).

2. Platine selon la revendication 1, **caractérisée en ce que** ladite pièce écrou (2) comprend deux éléments de tête (22) répartis de part et d'autre de l'axe de passage (200) de vis ménagé à travers la pièce écrou (2), chaque élément de tête (22) présentant deux oreilles (220) et la droite passant par les deux éléments de tête (22) étant sensiblement parallèle à l'axe longitudinal de la fente (100) correspondante.

3. Platine selon l'une des revendications précédentes, **caractérisée en ce que** ladite platine (1) comprend deux fentes (100) emprisonnant chacune une pièce écrou (2), lesdites fentes (100) étant orientées parallèlement l'une à l'autre en étant écartées l'une de l'autre suivant leur direction longitudinale, et, d'autre part, écartées l'une de l'autre suivant une direction transversale à leur direction longitudinale.

4. Platine selon l'une des revendications précédentes, **caractérisée en ce que** chaque fente (100) est réalisée par découpe du corps de platine et enfoncement de la bordure périphérique de la fente (100) en direction du côté du corps de platine au niveau duquel est destiné à être positionné l'élément de base (21), de telle sorte que le ou chaque élément de tête (22) de la pièce écrou (2) qui s'étend à travers la fente (100), ne dépasse pas du plan d'affleurement de la face du corps de platine située opposée au côté d'applique de l'élément de base (21).

5. Platine selon l'une des revendications précédentes, **caractérisée en ce que** ledit ou chaque élément de tête (22) est obtenu par découpe partielle et déformation d'une partie de l'élément de base (21) de telle sorte que la ou chaque partie destinée à former élément de tête (22) est amenée en saillie d'une face de l'élément de base.

6. Platine selon l'une des revendications précédentes, **caractérisée en ce que** chaque oreille (220) est réalisée par incision d'une partie de l'élément de tête (22) correspondant, et écartement de ladite partie transversalement à l'axe longitudinal de la fente.

7. Platine selon l'une des revendications précédentes, **caractérisée en ce que** les bords longitudinaux de la platine présentent chacun au moins une partie pliée en retour (101) de manière à augmenter la rigidité de la platine.

8. Platine selon l'une des revendications précédentes, **caractérisée en ce que** les parties d'extrémité de la platine (1) sont pliées de manière à présenter une partie (102) s'étendant jusqu'au bord d'extrémité libre correspondant suivant un angle donné par rapport au plan moyen du corps (10) de platine, lesdites parties inclinées (102) des extrémités opposées de la platine (1) étant orientées en V inversé en position fixée de la platine sur ladite structure support.

9. Procédé de fabrication d'une platine de fixation (1) conforme à l'une des revendications précédentes, à l'aide d'un corps (10) de type plaque présentant au moins une fente (100) et d'une pièce écrou (2) formée par un élément de base (21) présentant deux faces opposées à travers lesquelles est ménagé un orifice (200) de passage de vis,
**caractérisé en ce que** ledit procédé comprend les étapes suivantes :
- déformation d'au moins une partie (22), de préférence deux parties (22), dudit élément de base (21), appelée(s) élément(s) de tête, pour (les) l'amener en saillie d'une face dudit élément de base (21),
- positionnement dudit élément de base (21) d'un côté du corps de platine (1) en engageant le ou chaque élément de tête (22) à travers la fente (100), ledit élément de base (21) présentant une largeur hors-tout, prise orthogonalement à l'axe longitudinal de la fente (100), supérieure à la largeur de ladite fente (100),
- déformation de deux parties, appelées oreilles (220), dudit ou de chaque élément de tête (22), de telle sorte que lesdites oreilles (220) s'étendent de part et d'autre de l'axe longitudinal de la fente (100) correspondante, au droit des bords longitudinaux de ladite fente, de manière à maintenir la pièce écrou (2) prisonnière de la fente (100).

10. Procédé de fabrication d'une platine (1) de fixation selon la revendication 9, **caractérisé en ce que** la déformation dudit élément de base (21) pour l'obtention dudit ou de chaque élément de tête (22) est réalisée par crevage à l'aide d'un outil à deux lames écartées entre elles d'une distance correspondant à la largeur souhaitée de l'élément de tête (22).

11. Procédé de fabrication d'une platine (1) de fixation selon l'une des revendications 9 et 10, **caractérisé en ce que** la déformation des deux oreilles (220) dudit ou de chaque élément de tête (22) est réalisée à l'aide d'un outil à deux pointes, chaque pointe, destinée à la formation d'une oreille (220), présentant une partie de coupe droite et une partie de coupe inclinée permettant, lors de la pénétration de la pointe dans l'élément de tête (22), d'écarter ladite oreille (220) à réaliser vers l'extérieur de l'élément de tête (22).
